**Europäisches Patentamt**

(19) **European Patent Office**

**Office européen des brevets**

(11) Numéro de publication: **0 003 267**

**B1**

(12) # FASCICULE DE BREVET EUROPEEN

(21) Numéro de dépôt: **78400095.2**

(22) Date de dépôt: **12.09.78**

(51) Int. Cl.³: **B 62 D 43/04**

(54) **Dispositif de retenue et de verrouillage pour berceau de roue de secours**

(30) Priorité: **30.01.78 FR 7802471**

(43) Date de publication de la demande:
**08.08.79 Bulletin 79/16**

(45) Mention de la délivrance du brevet:
**12.11.80 Bulletin 80/23**

(84) Etats contractants désignés:
**BE DE GB NL SE**

(56) Documents cités:
**FR - A - 1 416 531**
**FR - A - 1 551 853**
**DE - A - 2 357 026**
**GB - A - 1 189 490**

(73) Titulaire: **REGIE NATIONALE DES USINES RENAULT**
**Boîte postale 103**
**8-10 avenue Emile Zola**
**F - 92109 Boulogne-Billancourt (FR)**

(72) Inventeur: **Barre, Michel**
**4 bis Avenue Gaston Boissier**
**92370 Chaville (FR)**
**Carrion, Jean Pierre**
**6, rue des Vieilles Vignes**
**92400 Courbevois (FR)**

Courier Press, Leamington Spa, England.

## Dispositif de retenue et de verrouillage pour berceau de roue de secours

La présente invention, due à la collaboration de MM. Michel BARRE et Jean-Pierre CARRION, se rapporte à un dispositif de retenue et de verrouillage, notamment de berceau de roue de secours monté pivotant sous le plancher d'un véhicule automobile et, en particulier, à un verrou muni d'un système de sécurité à déverrouillage manuel et à verrouillage automatique.

Le brevet FR—A— 1551853 décrit un verrou comportant un boîtier logeant un crochet de retenue du berceau, crochet pouvant être libéré par le pivotement d'un levier commandé de l'intérieur du coffre à bagages à partir d'une tige poussoir.

Mais, en cas de défaillance du couple levier — crochet de retenue formant un cliquet d'arrêt, le berceau est définitivement libéré, ce qui peut provoquer la perte intempestive de la roue secours. Pour pallier à cet inconvénient, l'objet du brevet FR—A—2 243 594 prévoit un second crochet dit de sécurité pour retenir le berceau en cas de défaillance du crochet de retenue. Plus précisément, le brevet décrit un dispositif de retenue et de verrouillage comprenant un boîtier logeant un crochet de retenue et de verrouillage du berceau ainsi qu'un crochet de sécurité soumis à l'action d'un ressort de rappel, les deux crochets étant effacés successivement par une tige de commande accessible de l'intérieur du véhicule pour libérer le berceau, le crochet de sécurité étant en outre sollicité directement par la remontée du berceau en vue de son verrouillage

Mais ce dispositif nécessite l'utilisation de la manivelle pour commander la rotation de la tige par l'intermédiaire d'un écrou accessible dans le coffre. La manoeuvre est lente et l'effacement des crochets de retenue et de sécurité n'est pas simultanée. Il faut atteindre la fin du filetage de la tige de commande pour que le crochet de retenue soit effacé par rotation, après une phase de translation, ce qui provoque alors l'effacement consécutif du crochet de sécurité.

Cette solution suppose en outre de pouvoir exercer, sur la tige filetée et sur le boîtier du verrou des efforts importants nécessitant un verrou robuste et donc cher. De plus, la complexité du mécanisme et la multiplication des petites pièces rendent le verrou plus sujet aux grippages dus à l'encrassement par les projections de boue. Par ailleurs, au cours de la remise en place du berceau sous le plancher du véhicule, seul le crochet de sécurité est sollicité directement par le berceau. Le verrouillage du berceau par le crochet de retenue est réalisé indépendamment, par la rotation en sens inverse de la tige de commande filetée à l'aide de la manivelle.

Let but de l'invention est donc de simplifier les réalisations précédentes tout en conservant la sécurité par le crochet de sécurité et de simplifier les manipulations de déverrouillage et de reverrouillage du berceau, en particulier par la suppression de l'emploi d'un outil tel que la manivelle.

A cet effet, l'invention est caractérisée en ce que le déverrouillage du berceau par l'effacement quasi- simultané des crochets de sécurité et de retenue est obtenu par la traction d'une tirette à commande manuelle et en ce que les crochets de sécurité et de retenue sont sollicités successivement et directement par le berceau pour verrouiller ce dernier automatiquement à sa remise en place sous le plancher.

Selon un mode de réalisation préféré, le verrou comprend, dans un boîtier en forme de chape, fixé sous le plancher du véhicule:

— un crochet de sécurité monté pivotant autour d'un premier axe traversant la chape, crochet rappelé par un ressort dans le sens du verrouillage du berceau et relié directement à la tirette de commande manuelle,

— un levier adjacent monté pivotant autour du même axe et entraîné par le crochet de sécurité au moyen d'un ergot traversant une lumière et

— un crochet de retenue du berceau monté pivotant autour d'un deuxième axe parallèle au premier, crochet entraîné par le levier et sollicité contre lui, bord à bord, par un ressort de traction, les bords en contact du crochet de retenue et du levier présentant, en outre, deux décrochements complémentaires formant cliquet de manière à verrouiller le crochet par le levier dans la position correspondant au verrouillage du berceau.

D'autres particularités apparaîtront au cours de la description qui suit d'un mode de réalisation donné, à titre d'exemple, en référence au dessin annexé sur lequel:

— les figures 1 et 2 représentent, vu en plan et de dessus, le berceau de roue de secours en prise dans le verrou selon l'invention,

— la figure 3 est une vue en perspective éclatée des différentes pièces constituant le verrou et

— les figures 4 et 5 illustrent le fonctionnement du verrou respectivement représenté dans les positions verrouillée et déverrouillée.

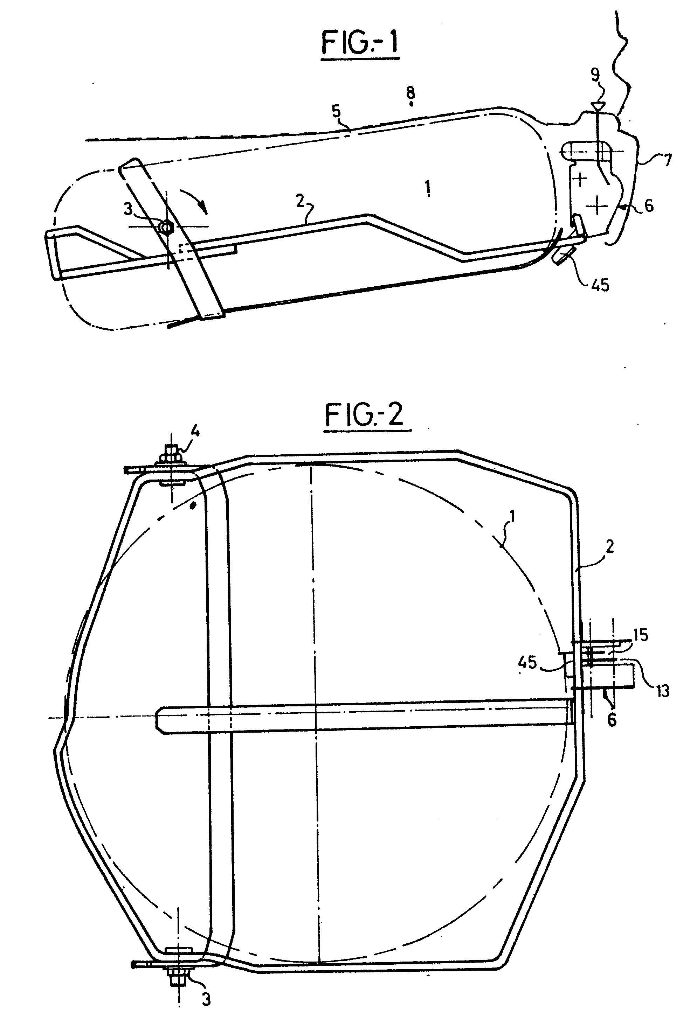

En se rapportant aux figures 1 et 2, on reconnaît le contour d'une roue de secours 1 maintenue en place dans un berceau 2, de structure tubulaire articulé en 3 et 4 sous le plancher 5 d'un véhicule.

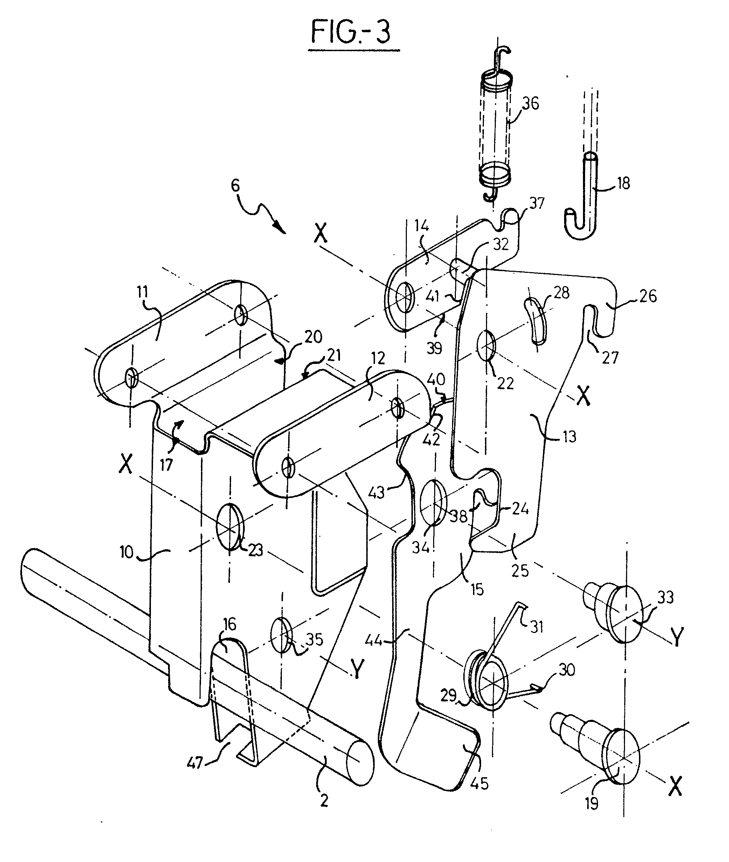

Le berceau 2 vient se verrouiller dans le boîtier de verrou 6 fixé sous la carrosserie, derrière la jupe arrière 7 du véhicule. Le déverrouillage et la libération du berceau sont commandés de l'intérieur du coffre à bagages 8, au moyen de la tirette 9 montée sur le plancher 5. Comme on le voit sur la figure 3, le verrou se compose, essentiellement, d'un boîter 10 en

forme de chape en tôle pliée, fixée par deux ailes supérieures 11, 12 sur la caisse du véhicule, d'un crochet de sécurité 13, d'un levier intermédiaire 14 et d'un crochet de retenue 15 articulés à l'intérieur de la chape 10 autour des axes X et Y.

La chape 10 présente une fente 16 à sa partie inférieure pour l'introduction, puis le verrouillage de la tige du berceau 2. La partie supérieure 17 de la chape est ouverte pour permettre le débattement de la tige 18 de la tirette.

Le crochet de sécurité 13 est monté pivotant autour d'un premier axe X matérialisé par l'axe 19 traversant le crochet 13 et les ailes 20, 21 de la chape par les alésages 22 et 23.

Cet axe métallique 19 peut être simplement rivé sur la chape.

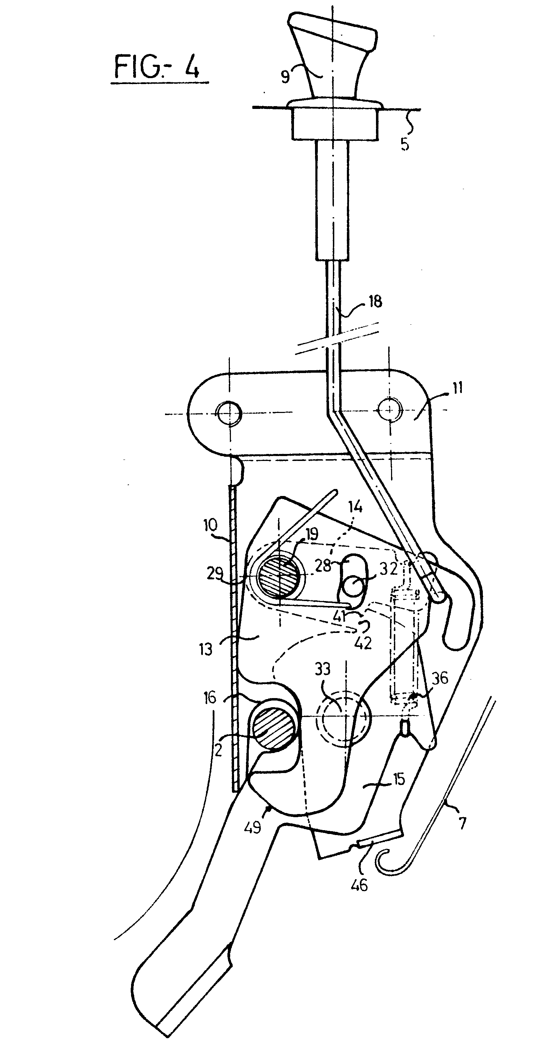

Le crochet de sécurité 13 est, en fait, une pièce découpée présentant à sa partie inférieure une encoche 24 se terminant par un bec 25 et destiné à venir emprisonner la tige du berceau 2 dans la fente 16 du boîtier (figure 4).

La partie supérieure du crochet 13 se prolonge par un nez 26 dont l'encoche 27 est destinée à l'accrochage de la tige 18 de la tirette.

Par ailleurs, le crochet 13 est muni d'une lumière oblongue 28 curviligne et concentrique à l'axe de rotation X, dont le rôle sera expliqué ci-après.

Enfin, le crochet 13 est soumis à l'action d'un ressort de rappel 29 enroulé autour de l'axe 19 et dont les extrémités 30, 31 en "épingle à cheveu" prennent appui respectivement dans la lumière oblongue 28 et dans un orifice non visible pratiqué dans l'aile 21 de la chape.

Un levier 14 adjacent au crochet de sécurité 13 est monté pivotant autour du même axe 19 que celui du crochet et possède un ergot 32 venant s'engager dans la lumière oblongue 28 du crochet avec possibilité de débattement, fonction de la longueur curviligne de la lumière 28.

Le levier 14 pivote dans le même plan que le crochet de retenue 15 monté pivotant autour d'une deuxième axe Y matérialisé par l'axe 33 situé plus bas que l'axe 19 et traversant le crochet 15 et les ailes 20, 21 de la chape par les alésages 34 et 35. Cet axe 33 est également rivé sur la chape.

Levier 14 et crochet de retenue 15 sont reliés et maintenus en contact, bord à bord, au moyen d'un ressort de traction 36 accroché dans des encoches 37, 38 prévues respectivement au-dessus du levier et audessous du crochet.

Par ailleurs, les bords 39, 40 en contact glissant du levier et du crochet présentent deux décrochements complémentaires 41, 42 formant cliquet de manière à verrouiller le crochet de retenue 15 par le levier 14 lorsque le crochet occupe la position correspondant au verrouillage du berceau 2.

A cet effet, le crochet de retenue 15 présente une encoche 43, à proximité de son pivot, encoche se superposant grossièrement à celle 24 du crochet de sécurité, en position de verrouillage, pour emprisonner à son tour la tige du berceau 2 dans la fente 16· du boîtier.

Enfin, le crochet de retenue 15 est prolongé à sa partie inférieure par une queue 44 munie d'une palette 45 afin de permettre une intervention manuelle de secours du verrouillage par pression sur la palette 45, en cas d'effort insuffisant de l'opérateur sur le berceau 2.

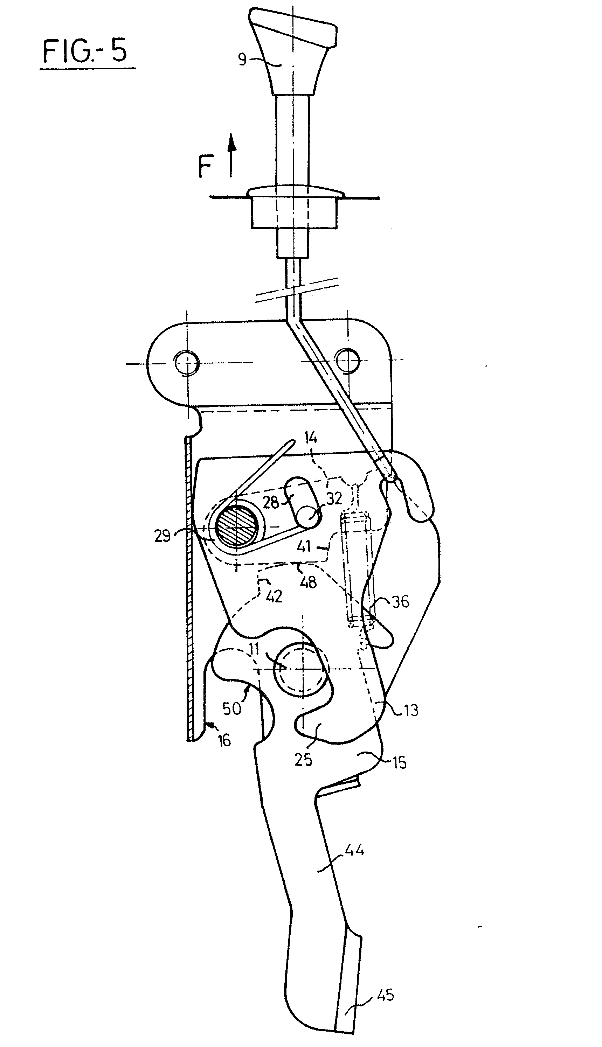

Le fonctionnement du dispositif est le suivant, en référence aux figures 4 et 5.

En partant de la position de verrouillage représentée sur la figure 4, dans laquelle le berceau 2 est en prise au fond de la fente 16 du boîtier et retenu par le crochet 15, l'opérateur tire vers lui le bouton de la tirette 9 logé dans le coffre à bagages 8 pour l'amener dans la position de la figure 5, suivant la flèche F.

Au cours de la manœuvre, la tige 18 de la tirette fait pivoter le crochet de sécurité 13 dans le sens du déverrouillage, c'est-à-dire dans un sens dégageant l'entrée de la fente 16 du boîtier contre l'action du ressort de rappel 29.

Le pivotement du crochet de sécurité 13 entraîne celui du levier 14 par l'intermédiaire de la liaison lumière 28 — ergot 32, ce qui libère le cliquet 41, 42 de verrouillage du crochet de retenue 15.

Par l'intermédiaire du ressort de traction 36, le pivotement du levier 14 entraîne simultanément celui du crochet de retenue 15 qui libère la tige du berceau 2.

Sous son propre poids, ce dernier pivote sous le plancher 5 et permet d'extraire la roue de secours 1.

La course du crochet de retenue 15 est, cependant, limitée par une butée 46 ménagée dans la partie inférieure du boîtier 10, sous la forme d'une encoche 47 débouchant dans la fente 16 prévue pour le berceau.

Le crochet de retenue 15 peut rester dans cette position stable grâce à l'existence d'un méplat 48 coopérant avec le bord du levier 14, sous la contrainte exercée par le ressort de traction 36.

Après relachement de la tirette 9, le crochet de sécurité 13 est rappelé par son ressort 29, mais sa course est limitée par la longueur curviligne de la lumière 28 appui su l'ergot 32.

Toutefois, le crochet de sécurité 13 pivote suffisamment pour que le bec inférieur 25 vienne se placer devant l'entrée de la fente 16, sur la trajectoire du berceau 2.

A la remontée du berceau, ce dernier efface automatiquement et provisoirement le crochet de sécurité 13 grâce à la présence d'une rampe extérieure 49.

Si le berceau 2 est remonté avec une force suffisante, la tige du berceau entre en contact avec une rampe 50 formant le profile supérieur de l'encoche 43 du crochet de retenue 15, le ramenant de la position de la figure 5 à la position de verrouillage de la figure 4.

Au cours de son pivotement, le méplat 48 du crochet de retenue glisse contre le bord correspondant du levier 14 jusqu'à l'engagement du cliquet 41, 42 contraint par le ressort de traction 36, verrouillant ainsi le crochet de retenue 15 dans sa position de verrouillage du berceau 2.

Si le berceau est remonté avec une force insuffisante pour engager la rampe 50 du crochet de retenue, il reste cependant maintenu par le crochet de sécurité 13.

Le verrouillage manuel est alors possible en poussant directement sur la palette 45 jusqu'au verrouillage du crochet de retenue 15 par le levier 14.

L'invention n'est pas limitée à l'exemple de réalisation décrit et peut être appliquée notamment à la fermeture d'un panneau, coffre ou caisson pivotant.

**Revendications**

1. Dispositif de retenue et de verrouillage, notamment d'un berceau de roue de secours monté pivotant sous le plancher d'un véhicule automobile, comprenant un boîtier logeant un crochet de retenue et de verrouillage du berceau ainsi qu'un crochet de sécurité soumis à l'action d'un ressort de rappel, les deux crochets étant effacés conjointement par une tige de commande accessible de l'intérieur du véhicule pour libérer le berceau, le crochet de sécurité étant en outre sollicté directement par la remontée du berceau en vue de son verrouillage, caractérisé en ce que le déverrouillage du berceau (2) par l'effacement quasi-simultané des crochets de sécurité (13) et de retenue (15) est obtenu par la traction d'une tirette (9) à commande manuelle et en ce que lesdits crochets sont sollicités successivement et directement par le berceau (2) pour verrouiller ce dernier automatiquement à sa remise en place sous le plancher (5).

2. Dispositif selon la revendication 1 caractérisé en ce que le verrou (6) comprend, dans un boîtier (10) en forme de chape:

—un crochet de sécurité (13) monté pivotant autour d'un premier axe (19) traversant la chape (10), crochet rappelé par un ressort (29) dans le sens du verrouillage du berceau (2) et relié directement à la tirette (18) de commande manuelle,

— un levier adjacent (14) monté pivotant autour du même axe (19) et entraîné par le crochet de sécurité (13) au moyen d'un ergot (32) traversant une lumière (28) et

— un crochet de retenue (15) du berceau monté pivotant autour d'un deuxième axe (33) parallèle au premier, crochet entraîné par le levier (14) et sollicité contre lui, bord à bord, par un ressort de traction (36), les bords en contact du crochet de retenue et du levier présentant, en outre, deux décrochements complémentaires (42, 41) formant cliquet de manière à verrouiller le crochet (15) par le levier (14) dans la position correspondant au verrouillage du berceau (2).

3. Dispositif selon la revendication 2 caractérisé en ce que le levier (14) est muni d'un ergot (32) d'entraînement traversant une lumière oblongue (28) pratiquée dans le crochet de sécurité (13).

4. Dispositif selon la revendication 2 caractérisé en ce que le crochet de sécurité (13) et le crochet de retenue (15) présentent chacun une encoche (24,43) se superposant grossièrement au verrouillage pour emprisonner le berceau (2) dans une fente (16) pratiquée dans les ailes (20, 21) du boîtier.

5. Dispositif selon la revendication 2 caractérisé en ce que le bec (25) du crochet de sécurité (13) présente une rampe extérieure (49) destinée à effacer automatiquement le crochet (13) à la remontée du berceau (2) contre le boîtier (10).

6. Dispositif selon la revendication 2 caractérisé en ce que le crochet de retenue (15) présente un prolongement (44) inférieur muni d'une palette (45) afin de permettre un fonctionnement manuel de secours du verrouillage du berceau (2).

7. Dispositif selon les revendications 2 et 4 caractérisé en ce que la partie inférieure du boîtier (10) est entaillée d'une encoche (47) débouchant dans la fente (16) du boîtier pour former une butée limitant le pivotement du crochet de retenue (15) au déverrouillage.

8. Dispositif selon les revendications 2 et 3 caractérisé en ce que le ressort de rappel du crochet de sécurité (13) est un ressort de torsion (29) en "épingle à cheveu", enroulé autour de l'axe (19) du crochet et dont les extrémités (30, 31) prennent appui respectivement dans la lumière oblongue (28) du crochet (13) et dans un orifice de l'aile (21) du boîtier (10).

**Claims**

1. A retaining and locking device in particular for a spare wheel cradle which is mounted pivotally under the floor of a motor vehicle, comprising a casing which houses a hook member for retaining and locking the cradle and a safety hook member subjected to the action of a return spring, the two hook members being moved aside jointly by an actuating rod which is accessible from the interior of the vehicle to free the cradle, the safety hook member also being acted upon directly by the upward return movement of the cradle for locking thereof, characterised in that unlocking of the cradle (2) by simultaneously moving aside the safety hook member (13) and the retaining hook member (15) is effected by pulling a manually operable pull member (9), and that said hook members are acted upon successively and directly by the cradle for locking the cradle automatically on its being returned into position below the floor (5).

2. A device according to claim 1 characterised in that the lock means (6) comprises, in a fork-shaped casing (10):

— a safety hook member (13) mounted pivotally about a fist axis (19) passing through the casing (10), the hook member being returned by a spring (29) in the direction of locking the cradle (2) and being directly connected to the manually operable pull member (18);

— an adjacent lever (14) mounted pivotally about the same axis (19) and entrained by the safety hook member (13) by means of a lug (32) passing through an aperture (23); and

— a hook member (15) for retaining the cradle, mounted pivotally about a second axis (33) parallel to the first, the hook member being entrained by the lever (14) and being urged thereagainst in edge-to-edge relationship by a tension spring (36), the contacted edges of the retaining hook member and the lever also having two complementary recesses (42, 41) forming a pawl so as to lock the hook member (15) by the lever (14) in the position corresponding to locking of the cradle (2).

3. A device according to claim 2 characterised in that the lever (14) is provided with an entrainment lug (32) which passes through an oblong aperture (28) provided in the safety hook member (13).

4. A device according to claim 2 characterised in that the safety hook member (13) and the retaining hook member (15) each have a notch (24, 43) which are roughly superimposed upon locking in order to trap the cradle (2) in a slot (16) provided in the limbs (20, 21) of the casing.

5. A device according to claim 2 characterised in that the nose (25) of the safety hook member (13) has an outside ramp means (49) intended automatically to move the hook member (13) aside upon the cradle (2) moving upwardly again against the casing (10).

6. A device according to claim 2 characterised in that the retaining hook member (15) has a lower extension (44) provided with a blade (45) in order to permit emergency manual operation of the means locking the cradle (2).

7. A device according to claims 2 and 4 characterised in that the lower part of the casing (10) is grooved with a notch (47) which opens into the slot (16) of the casing to form an abutment means for limiting the pivotal movement of the retaining hook member (15) upon unlocking.

8. A device according to claims 2 and 3 characterised in that the return spring of the safety hook member (13) is a 'hairpin' type torsion spring (29) which is wound around the axis (19) of the hook member and whose ends (30, 31) bear respectively in the oblong aperture (28) of the hook member (13) and in an orifice in the limb (21) of the casing (10).

**Patentansprüche**

1. Vorrichtung zum Festhalten und Verriegeln insbesondere eines Bügels für ein Reserverad, der schwenkbar unterhalb des Bodens eines Kraftfahrzeuges angeordnet ist, mit einem Gehäuse, in welchem ein Haltehaken für die Verriegelung des Bügels und ein unter der Wirkung einer Rückholfeder stehender Sicherheitshaken angeordnet sind, wobei beide Haken durch eine vom Inneren des Kraftfahrzeuges aus zugängliche Betätigungsstange gemeinsam verschwenkt werden können zum Freigeben des Bügels und wobei der Sicherheitshaken durch das Anheben des Bügels im Hinblick auf seine Verriegelung direkt verschiebbar ist, dadurch gekennzeichnet, daß eine manuell betätigbare Zugvorrichtung (9) zum Entriegeln des Bügels (2) durch gleichzeitiges Verschwenken des Sicherheitshakens (13) und des Haltehakens (15) durch Zugeinwirkung vorgesehen ist und daß die Haken nacheinänder und direkt durch den Bügel (2) betätigbar sind um diesen in seiner Endstellung unterhalf des Bodens (5) automatisch zu verriegeln.

2. Vorrichtung nach Anspruch 1, dadurch gekennzeichnet, daß die Verriegelungsanordnung (6) in einem haubenförmigen Gehäuse (10) folgende Teile aufweist:

— einen Sicherheitshaken (13), der schwenkbar um eine erste Achse (19) angeordnet ist, welche das Gehäuse (10) durchsetzt und der unter der Wirkung einer Feder (29) in Verriegelungsrichtung des Bügels (2) steht und direkt mit der Zuganordnung (18) der Handsteuerung verbunden ist,

— einen benachbarten, schwenkbar um die gleiche Achse (19) angeordneten Hebel (14), der von dem Sicherheitshaken (13) über einen Anschlag (32), der eine Öffnung (28) durchsetzt betätigbar ist und

— einen Haltehaken (15) für den Bügel, der schwenkbar um eine zweite Achse (33) parallel zur ersten Achse angeordnet ist, wobei der Haken durch den Hebel (14) betätigbar ist und unter der Wirkung einer Zugfeder (36) Rand an Rand mit ihm liegt, wobei die sich berührenden Ränder des Haltehakens und des Hebels zwei komplementäre Aussparungen (42, 41) aufweisen, die eine Sperrklinke bilden, um so den Haken (15) durch den Hebel (14) in der Verriegelungsstellung für den Bügel (2) zu verriegeln.

3. Vorrichtung nach Anspruch 2, dadurch gekennzeichnet, daß der Hebel (14) einen Anschlag (32) aufweist, der eine im Sicherheitshaken (13) angeordnete längliche Öffnung (28) durchsetzt.

4. Vorrichtung nach Anspruch 2, dadurch gekennzeichnet, daß sowohl der Sicherheitshaken (13) als auch der Haltehaken (15) je eine Aussparung (24, 43) aufweisen, die sich ungefähr in Verriegelungsstellung überlagern um den Bügel (2) in einen in den Seitenteilen (20, 21) des Gehäuses angeordneten Schlitz festzulegen.

5. Vorrichtung nach Anspruch 2, dadurch gekennzeichnet, daß die Nase (25) des Sicherheitshakens (13) eine äußere geneigte Fläche (49) aufweist um den Haken (13) beim Anheben des Bügels (2) in Richtung des Gehäuses (10) automatisch zu verschwenken.

6. Vorrichtung nach Anspruch 2, dadurch gekennzeichnet, daß der Haltehaken (15) eine nach unten ragende Verlängerung (44) aufweist, die mit einer Platte (45) versehen ist um ein manuells Verriegeln des Bügels (2) zu ermöglichen.

7. Vorrichtung nach Ansprüchen 2 und 4, dadurch gekennzeichnet, daß der untere Teil des Gehäuses (10) mit einer Aussparung (47) versehen ist, die im Spalt (16) des Gehäuses mündet, um so einen Anschlag zu bilden, der die Schwenkbewegung des Haltehakens (15) bei der Entriegelung begrenzt.

8. Vorrichtung nach Ansprüchen 2 und 3, dadurch gekennzeichnet, daß die Rückholfeder des Sicherheitshakens (13) eine haarnadelförmige Torsionsfeder (29) ist. die auf der Achse (19) des Hakens aufgewickelt ist und deren Enden (30, 31) sich in de länglichen Öffnung (28) des Hakens (13) bzw. in einer Öffnung in der Seitenwand (21) des Gehäuses (10) abstützen.

## FIG.-1

## FIG.-2

## FIG.-3

FIG.- 4

**0 003 267**

FIG.- 5

F ↑